Europäisches Patentamt

European Patent Office

Office européen des brevets

(11) Veröffentlichungsnummer: **0 405 058**

**A1**

(12) **EUROPÄISCHE PATENTANMELDUNG**

(21) Anmeldenummer: 90105535.0

(22) Anmeldetag: 23.03.90

(51) Int. Cl.5: **B29C 47/92**

(30) Priorität: 29.06.89 DE 3921402

(43) Veröffentlichungstag der Anmeldung:
02.01.91 Patentblatt 91/01

(84) Benannte Vertragsstaaten:
AT BE DE DK ES FR GB IT NL SE

(71) Anmelder: Kunststoff-Verarbeitungs GmbH
Dirk A. Brügmann
Werkzeugstrasse 18
D-5800 Hagen-Halden(DE)

(72) Erfinder: Brügmann, Dirk
Dorf Reingsen
D-5840 Schwerte 4(DE)

(74) Vertreter: Patentanwälte Müller-Boré, Deufel,
Schön, Hertel, Lewald, Otto
Postfach 26 02 47 Isartorplatz 6
D-8000 München 26(DE)

(54) **Lichtelektrischer Messkopf zur Ueberwachung eines Strangpresskunststoffprofiles.**

(57) Ein lichtelektrischer Meßkopf (26) zur Überwachung des Querschnitts eines Profils zwischen Extruder und Kalibriereinrichtung einer Strangpresse zur Herstellung von Kunststoffprofilen (24) weist im Bereich eines freien Kopfendes des Meßkopfgehäuses (30) zwei Lichtdurchgangsöffnungen (38, 42) für einen Lichtaustritt bzw. Lichteintritt auf. Die Lichtdurchgangsöffnungen sind auf gegenüberliegenden Seiten eines Profildurchgangs (40) angeordnet. In jede Öffnung (38, 42) ist eine lichtdurchlässige Glasabdeckung (64, 66) eingesetzt. Außerdem sind in das Meßkopfgehäuse (30) zwei Heizelemente (60, 62) im Bereich von dessen freien Kopfende in unmittelbarer Nachbarschaft zu den Glasabdeckungen (64) und (66) eingesetzt. Die Heizelemente sind mit einer Temperatureinstelleinrichtung verbunden, die die Temperatur des freien Kopfendes des Meßkopfgehäuses auf der Temperatur des Profils (24) am Düsenausgang des Extruders hält.

FIG. 3

EP 0 405 058 A1

## LICHTELEKTRISCHER MESSKOPF ZUR ÜBERWACHUNG EINES STRANGPRESSKUNSTSTOFFPROFILES

Die Erfindung betrifft einen lichtelektrischen Meßkopf zur Überwachung des Querschnittes eines Profils zwischen Extruder und Kalibriereinrichtung einer Strangpresse zur Herstellung von Kunststoffprofilen, der im Bereich eines freien Kopfendes des Meßkopfgehäuses zwei Lichtdurchgangsöffnungen für einen Lichtaustritt bzw. Lichteintritt aufweist, die auf gegenüberliegenden Seiten eines Profildurchgangs angeordnet sind und jeweils eine lichtdurchlässige Glasabdeckung aufweisen.

Ein solcher lichtelektrischer Meßkopf wird häufig zur Ermittlung einer proportionalen Veränderung eines Profils vor einer Kalibriereinrichtung, unmittelbar nachdem das Profil die Extruderdüse verlassen hat, eingesetzt. Andere Anwendungen dieses Meßkopfes im Bereich zwischen Extruderdüse und Kalibriereinrichtung sind denkbar, z.B. die Überwachung der Ansammlung von Staub. Ein derartiger Meßkopf ist in der DE-OS 32 34 126 und EP-OS 0 164 029 beschrieben.

Im Bereich der Austrittsöffnung der Extruderdüse herrschen üblicherweise Temperaturen zwischen etwa 160° C und 300° C, während im Bereich der Eintrittsöffnungen zur Kalibriereinrichtung üblicherweise Temperaturen zwischen etwa +15° C und +30° C und im Zusammenhang mit einigen Kunststoffarten bis zu +80° C herrschen.

Außerdem ist der Abstand zwischen der Austrittsöffnunge der Extruderaustrittsdüse und der Eintretssöffnung zur Kalibriereinrichtung sehr gering, so daß der Meßkopfkörper im Hinblick auf die hohen Temperaturen im Bereich der Austrittsöffnung der Extruderdüse konzipiert sein muß, d.h. aus entsprechend temperaturfesten Materialien bestehen muß. Aus diesem Grunde bestehen die lichtdurchlässigen Abdeckungen notwendigerweise aus Glas.

In der Praxis treten häufig Probleme mit gattungsgemäßen Meßköpfen auf, da die äußeren Oberflächen der Glasabdeckungen aus Glas zu einem Beschlagen neigen. Nähere Untersuchungen im Zusammenhang mit überraschend auftretenden Meßfehlern des Meßkopfes haben ergeben, daß sich dem Kunststoffprofilmaterial zugesetzte Additive wie Weichmacher und Gleitmittel, die bei den herrschenden Temperaturen dazu neigen, zu verdampfen, auf den Oberflächen der Glasabdeckungen niederschlagen. Diese Niederschläge auf den Oberflächen der Abdeckungen beeinflussen den Lichtdurchgang so, daß die Meßergebnisse des Meßkopfes fehlerhaft werden.

Aufgabe der Erfindung ist es, einen lichtelektrischen Meßkopf der eingangs genannten Gattung derart weiter zu bilden, daß das Problem des Niederschlags von flüchtigen Additiven des Kunststoffprofilmaterial auf den Glasabdeckungen auf einfache Weise vermieden ist.

Erfindungsgemäß zeichnet sich ein lichtelektrischer Meßkopf der eingangs genannten Gattung zu diesem Zweck aus durch eine elektrische Heizanordnung mit einer Temperatureinstelleinrichtung, die die Temperatur zumindest des freien Kopfendes des Meßkopfgehäuses auf der Temperatur des Profils am Extruderdüsenausgang hält.

Bevorzugt umfaßt die Heizanordnung je ein Heizelement für jede lichtdurchlässige Glasabdeckung, welches in dem Meßkopfgehäuse in der Nähe der zugeordneten Glasabdeckung angeordnet, vorteilhafterweise mit wärmeleitenden Gehäuseteilen dort wärmeleitend vergossen ist.

Bei einem erfindungsgemäßen Meßkopf wird dafür gesorgt, daß die beiden lichtdurchlässigen Glasabdeckungen im Betrieb eine Temperatur aufweisen, die etwa der Temperatur des Kunststoffprofilmaterials im Bereich von dessen Austritt aus der Extruderdüse entspricht. Hierdurch wird auf einfache Weise ein Niederschlag der flüchtigen Additive des Kunststoffprofilmaterials auf den Glasabdeckungen vermieden, da sie aufgrund der hohen Temperatur der Abdeckungen dort nicht kondensieren können.

Ausführungsbeispiele der Erfindung werden anhand der Zeichnung erläutert. Es zeigen

Fig. 1 eine Ausführungsform einer Strangpresse zur Herstellung von Kunststoffprofilen,

Fig. 2 in vergrößerter Darstellung das Austrittsende einer Extruderdüse und das Eintrittsende einer Kalibriereinrichtung,

Fig. 3 eine Seitenansicht eines Meßkopfes,

Fig. 4 eine schematische perspektivische Ansicht einer weiteren Ausführungsform eines Meßkopfes.

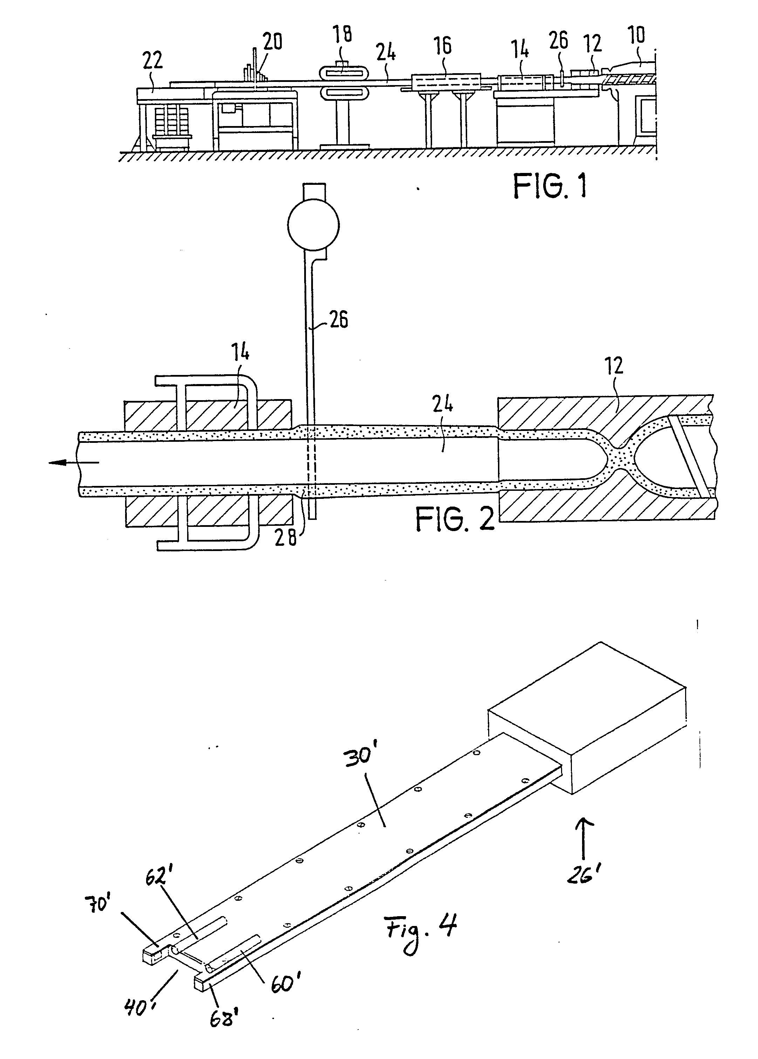

Die in Fig. 1 gezeigt Anlage zur Herstellung von Kunststoffprofilen besteht aus einer Schneckenpresse 10, einem Werkzeug 12, einer Kalibriereinrichtung 14, einer Kühlstrecke 16, einer Abzugseinrichtung 18, einer Ablängsäge 20 sowie einer Stapeleinrichtung 22. Zur Profilherstellung wird von der Schneckenpresse 10 das Kunststoffmaterial durch das Werkzeug 12 der Kalibriereinrichtung 14 zugeführt. In der anschließenden Kühlstrecke 16 wird mittels Wasser das Kunststoffprofil 24 soweit abgekühlt, daß keine thermoelastische Verformung mehr möglich ist. Nach Durchlaufen der Abzugseinrichtung 18 gelangt das Profil zu der automatischen Ablängsäge 20, wonach die Profile in der Stapeleinrichtung 22 gestapelt und für den Abtransport vorbereitet werden.

Zwischen dem Werkzeug oder der Düse 12 und der Kalibriereinrichtung 14 ist ein Meßkopf 26 zur Ermittlung einer proportionalen Veränderung eines Profils, beispielsweise durch eine Staubildung angeordnet. Wie aus Fig. 2 zu ersehen ist, befindet sich der Meßkopf 26 unmittelbar vor dem Eintrittsende der Kalibriereinrichtung 14.

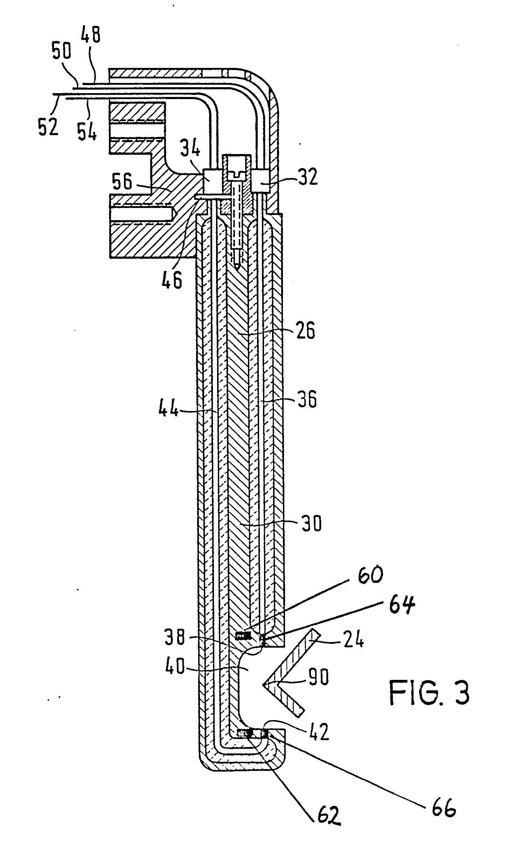

Wie insbesonder aus Fig. 3 zu ersehen ist, besteht der Meßkopf 26 aus einem Gehäuse 30, in welchem ein Lichtsender 32 und ein lichtempfindlicher Empfänger 34 angeordnet sind. Von dem Sender 32 wird abgegebene Lichtenergie über Lichtleitfasern 36 zu einer Lichtaustrittsöffnung 38 geführt. Das Gehäuse 30 ist mit einem Profildurchgang 40 ausgebildet, so daß der Meßkopf 26 das Kunststoffprofil 24 umgreifen kann. Der Austrittsöffnung 38 liegt eine Lichteintrittsöffnung 42 zu Lichtleitfasern 44 gegenüber, welche zu dem Empfänger 34 geführt sind.

In Fig. 3 sind weiterhin ein Filter 46, welches Licht nur mit bestimmten Wellenlängen durchtreten läßt, Anschlüsse 48, 50 für den Sender 32, Leitungen 52, 54 für den Empfänger 34 und ein Befestigungsabschnitt 56 für Führungszapfen und eine Ecke 90 des Profils 24 dargestellt.

Die Lichtleitfasern 36 und 44 weisen einen Durchmesser im Millimeterbereich auf, so daß das Gehäuse 30 des Meßkopfes 26 sehr dünn ausgeführt sein kann, wie es beispielsweise aus Fig. 4 ersichtlich ist.

Weiterhin ist bei der in Fig. 3 dargestellten Ausführungsform sowohl in der Lichtaustrittsöffnung 38 als auch auf der Lichteintrittsöffnung 42 je eine lichtdurchlässige Abdeckung 64 bzw. 66 aus Glas angeordnet, die das Ende der zugeordneten Lichtleitfasern schützend abdeckt.

Außerdem ist in Fig. 3 schematisch in der Nachbarschaft jeder Abdeckung 64 bzw. 66 je ein Heizelement 60, 62 angeordnet dargestellt. Die Heizelemente 60 und 62 sind in das Gehäuse 30 eingesetzt und vorteilhafterweise mit wärmeleitenden Gehäuseteilen zu einer Einheit vergossen, um die Wärmeübertragung zu optimieren.

Die Heizelemente 60 und 62 sind mit einer nicht dargestellten Temperatureinstelleinrichtung durch nicht dargestellte Leitungen verbunden.

In Fig. 4 ist schematisch eine weitere Ausführungsform eines Meßkopfes 26′ dargestellt, bei welchem der Profildurchgang 40′ am freien Stirnende des Meßkopfkörpers 30′ ausgebildet auf jeder von zwei gegenüberliegenden Seiten von je einem verlängerten Finger 68′ bzw. 70′ des Meßkopfgehäuses 30′ begrenzt ist. In jedem Finger 68′ bzw. 70′ ist je eine Lichtdurchgangsöffnung ausgebildet, die sich einander gegenüber liegen. Von den Lichtdurchgangsöffnungen ist lediglich eine im Finger 70′ schematisch dargestellt. Das Meßkopfgehäuse 30′ selber ist als ein sehr flacher Stab ausgebildet. Außerdem ist jede der nicht bezeichneten Lichtdurchtrittsöffnungen in den Fingern 68′ bzw. 70′ mit einer Abdeckung aus Glas vorgesehen. In das flache Meßkopfgehäuse 30′ sind zwei Heizelemente 60′ und 62′ eingesetzt, z.B. mit Körperteilen vergossen. Je eines der Heizelemente 60′, 62′ ist im Bereich eines der Finger 68′ bzw. 70′ angeordnet und so nahe an die zugeordnete Lichtdurchgangsöffnung gesetzt, wie es die Kanäle für die Lichtleitfasern zulassen. Die Heizelemente 60′ und 62′ sind wiederum mit einer nicht dargestellten Temperatureinstelleinrichtung durch ebenfalls nicht dargestellte Verbindungsleitungen verbunden.

## Ansprüche

1. Lichtelektrischer Meßkopf zur Überwachung des Querschnittes eines Profils zwischen Extruder (10, 12) und Kalibriereinrichtung (14) einer Strangpresse zur Herstellung von Kunststoffprofilen (24), der im Bereich eines freien Kopfendes des Meßkopfgehäuses (30) zwei Lichtdurchgangsöffnungen (38, 42) für einen Lichtaustritt bzw. Lichteintritt aufweist, die auf gegenüberliegenden Seiten eines Profildurchgangs (40) angeordnet sind und jeweils eine lichtdurchlässige Glasabdeckung (64, 66) aufweisen, **gekennzeichnet** durch eine elektrische Heizanordnung (60, 62; 60′, 62′) mit einer Temperatureinstelleinrichtung, die die Temperatur zumindest des freien Kopfendes des Meßkopfgehäuses (30) auf der Temperatur des Profils (24) am Extruderdüsenausgang hält.

2. Meßkopf nach Anspruch 1, dadurch **gekennzeichnet,** daß die Heizanordnung wenigstens ein Heizelement (60, 62; 60′, 62′) aufweist, das am Meßkopfgehäuse (30) in der Nähe der Glasabdeckungen (64, 66) der Lichtdurchgangsöffnungen (38, 42) angeordnet ist.

3. Meßkopf nach Anspruch 2, dadurch **gekennzeichnet,** daß in der Nähe jeder Glasabdeckung (64, 66) der Lichtdurchgangsöffnungen (38, 40) je ein Heizelement (60, 62; 60′, 62′) angeordnet ist.

4. Meßkopf nach Anspruch 2 oder 3, dadurch **gekennzeichnet,** daß die Heizelemente (60, 62; 60′, 62′) in das Meßkopfgehäuse (30) eingesetzt sind.

5. Meßkopf nach Anspruch 4, dadurch **gekennzeichnet,** daß die Heizelemente (60, 62; 60′ 62′) mit wärmeleitenden Teilen des Meßkopfgehäuses (30) wärmeleitend vergossen sind.

FIG. 1

FIG. 2

Fig. 4

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| Y | EP - A2 - 0 189 517 (PORSCHE) <br> * Ansprüche 4-11 * <br> -- | 1-5 | B 29 C 47/92 |
| Y | CH - A - 385 502 (BALZER) <br> * Seite 1, Zeilen 19-28 * <br> -- | 1 | |
| D,Y | EP - A2 - 0 164 029 (KUNSTSTOFF-VERARBEITUNGS GMBH) <br> * Gesamt * <br> -- | 1-5 | |
| A | DE - B - 2 819 395 (HOESCH-WERKE) <br> * Gesamt * <br> ---- | | |

|  |
|---|
| **RECHERCHIERTE SACHGEBIETE (Int. Cl.⁵)** |
| B 29 C <br> G 01 B <br> G 01 D <br> G 05 D |

Der vorliegende Recherchenbericht wurde für alle Patentansprüche erstellt.

| Recherchenort | Abschlußdatum der Recherche | Prüfer |
|---|---|---|
| WIEN | 12-10-1990 | REININGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veroffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82